# EUROPEAN PATENT APPLICATION

(11) **EP 4 002 181 A1**
(43) Date of publication of application: **25.05.2022**
(21) Application number: 21211948.1
(22) Date of filing: 04.10.2019
(51) Int. Cl.: G06F 21/64, H04L 9/40, G06Q 10/06, G06Q 20/06

(54) **A CONSENSUS METHOD AND FRAMEWORK FOR A BLOCKCHAIN SYSTEM**

(30) Priority: 05.10.2018 GB 201816291
(62) Divisional of application: 19787053.8
(71) Applicant: Dragon Infosec Ltd, London, Greater London WC1X 8DX (GB)
(72) Inventor: DENNIS, Richard Matthew, London, WC1X 8DX (GB)
(74) Representative: West, Jonathan David

(57) **Abstract**

A method for a blockchain system as implemented in a participant node is disclosed. The method comprises receiving a plurality of true random numbers, each associated with a given time interval, and one or more new blocks for appending to a local blockchain stored at the participant node. The method further comprises verifying the block header data of each new block and a cryptographic signature of each new block using a public key associated with the node that generated each new block; adding each new block to the local blockchain stored at the participant node if the new block is verified; and deleting, from the local blockchain, the block body for blocks stored at the participant node that do not meet a threshold, without deleting the block header corresponding to the deleted block body.

## Description

This application relates to methods for blockchain systems. In particular, the application relates to a consensus method for a blockchain system and a corresponding framework for operating the blockchain system.

Blockchain systems are a distributed record system using a sequence of blocks of data that are each consecutively linked using cryptography. Each block typically encapsulates a plurality of documents or transactions that are then shared between the nodes of a peer-to-peer network. The plurality of blocks act as a ledger that is distributed with local versions of the blockchain stored at each of the nodes in the peer-to-peer network running the blockchain system.

Blockchain concepts were initially devised to create a record of fact that is immutable and cannot subsequently be changed or modified covertly. This has typically been applied to transactions of digital cash, however this can be more generally applied to digital tokens that can be transferred between parties to establish rights and ownership over a process or item. These transfers, or uses of the digital tokens, are recorded as transactions in the blocks of the blockchain.

Because the tokens themselves are digital, it is possible for the corresponding data to be duplicated or otherwise edited. This is known as the double spending flaw, which arises out of the decentralised nature of most blockchain systems. Blockchain systems typically attempt to remove the reliance on a trusted third party / central counterparty and accordingly this single version of the truth is unavailable in truly decentralised blockchain systems. Accordingly, it has been necessary to devise protocols for the nodes of the blockchain system to arrive at a consensus of the true state of the blockchain.

The most common consensus protocol today is the proof of work protocol, which sets a computational problem with an answer that is simple to validate, but not simple to determine and pits the various nodes in a race to determine the answer. The first node to arrive at the answer writes a block incorporating this answer and a collection of transactions that have been confirmed as being valid by that first node. The completed block is then sent from this first node to the other nodes that it is aware of in the blockchain system, who then forward the completed block to any other nodes that they are in turn aware of.

Because the burden of the work associated with the computational problem is asymmetric, the other nodes can easily validate that the new block meets the requirements of the proof of work protocol and the race then begins for the next block. If more than one node solves the proof of work at a similar time then two or more versions of the blockchain will be in existence. There will usually be a rating mechanism for a node to determine which of the known versions of the blockchain should be selected as the authoritative version of the blockchain; however, due to the peer-to-peer nature of the network a node may not be aware of all of the versions of the blockchain and so different sets of nodes may begin working on the next block for respective versions of the blockchain. This may lead to the authoritative version of the blockchain changing from one version to another in a process known as forking. This reintroduces the possibility of a double spend and opens the system to a vulnerability to attack.

By design, the proof of work protocol results in the expenditure of a large amount of computer processing in order to attempt to avoid such an attack and to provide the distributed system with a level of trust. Some proof of work protocols have attempted to reduce the wastage of this computer processing and corresponding power usage by targeting computational problems that can be used in other areas, such as the determination of prime numbers with certain characteristics.

Alternative protocols have also been devised in order to try and avoid the need to perform this large amount of potentially wasteful computer processing. One alternative example is the proof of stake protocol, where the responsibility for writing new blocks is distributed amongst the largest stakeholders in the blockchain. The trust in such a protocol is inferred on the basis that these largest stakeholders have the most to lose if the blockchain is compromised and accordingly they may be considered to be the most likely to act in the best interests of the blockchain system. Another similar example is the proof of authority protocol, where only authorised nodes are able to write and confirm new blocks, but these authorised nodes are required to be linked to a user's public identity such that the user's reputation is at stake. This incentivises the authorised nodes to act in the best interests of the blockchain system in order to maintain their own reputation.

However, each of these alternatives tend towards a comparatively centralised system that is not distributed and thus go against the aims of blockchain systems. Therefore, we have appreciated that it would be desirable to provide an improved blockchain system with a low energy and computational power requirement for operation with improved distribution and double spend resistance.

### SUMMARY

The invention is defined in the independent claims to which reference should now be directed. Advantageous features are set out in the dependent claims.

In a first aspect, the present disclosure relates to a method for a blockchain system operated at a node participating in the blockchain system. The method comprises receiving, at a participant node, a node participation document comprising a list of node identifiers that uniquely identify each node participating in the blockchain system; receiving, at the participant node, a true random number associated with a current time interval; and determining, at the participant node, a leader node for the current time interval from the nodes listed in the node participation document based on a numerical disparity between the true random number associated with the current time interval and the node identifiers from the node participation document. The blockchain system identifies the leader node as the only node that can generate one or more new blocks during the corresponding time interval to be validly appended to a blockchain of the blockchain system

The method advantageously identifies a leader node for a given time interval in a truly random manner, with the leader node being given the exclusive ability to write one or more new blocks during that time interval for valid inclusion in the blockchain system by appending the new blocks to a blockchain of the blockchain system. This is possible because all of the participant nodes participating in the blockchain system can independently determine who the leader node is or was for a given time period based on the corresponding node participation document and true random number for that time interval. Blocks created during that time interval can then be determined by the participant nodes to be invalid if they were not created by the identified leader node and accordingly such blocks would not be verified into the blockchain stored locally by the participant nodes.

If the participant node determines that it is the leader node for the current time interval, the method may optionally comprise receiving, at the leader node, from the nodes participating in the blockchain system, new transactions for inclusion in the blockchain system; confirming, at the leader node, the received new transactions by searching for corresponding unspent transaction outputs in the blockchain system; generating, at the leader node, a new block comprising the confirmed new transactions and appending this block to a local blockchain stored at the leader node; and broadcasting, from the leader node, the new block to all of the nodes participating in the blockchain system.

If the participant node determines that it is not the leader node for the current time interval, the method may optionally comprise sending, from the participant node, any new transactions for inclusion in the blockchain system to the determined leader node for the duration of the current time interval.

This method further advantageously removes the need for a gossip protocol because each next new block can be sent directly from the originating node of the blockchain system that received the transaction to the leader node, or a corresponding buffer for the leader node. Furthermore, the need for a resource intensive distributed consensus protocol is also avoided whilst still providing a distributed and decentralised blockchain system.

Optionally, the leader node may generate new blocks comprising a block header and a block body, with the block header comprising: a hash of the previous block in the blockchain, a hash of the block body of the block, the true random number associated with the current time interval and a cryptographic signature of the block using a private key associated with the leader node. By including this data in the block header, nodes of the blockchain system can advantageously validate the block based on the cryptographic signature of the expected leader node for the given time interval based on the true random number and the node participation document that was valid at that time.

Optionally, the block header further comprises a Merkle tree root and a timestamp. This advantageously improves the integrity and immutable nature of the blockchain of the blockchain system.

Optionally, the node participation document further identifies a cryptographic public key associated with each of the nodes participating in the blockchain system. If the participant node determines that it is not the leader node for the current time interval, the method may further comprise receiving, by the participant node, one or more new blocks generated by the leader node, from the leader node; verifying, by the participant node, the block header data of the one or more new blocks and the cryptographic signature of the one or more new blocks using the public key associated with the determined leader node for the time interval associated with the one or more new blocks; and adding, by the participant node, the one or more new blocks to a local blockchain stored at the participant node if the blocks are verified.

Advantageously, in this method the participant nodes further receive one or more new blocks to be appended to their locally stored blockchain comprising a block header that can be used to verify the integrity of the block data of each block using digital signature public-key cryptography. The received and verified blocks are then used to update the locally stored blockchain so that it is up-to-date.

Optionally, one or more new blocks generated by the leader node may be written without a block size limit. This advantageously means that the number of transactions to be included in the new block can be scaled with the rate of new transactions in the blockchain system and therefore higher transactions rates can be achieved.

Optionally, the node participation document may identify a subset of the nodes participating in the blockchain system as being authorised for selection as the leader node; and the leader node determined by the participant node for the current time interval may be based on a numerical disparity between the true random number associated with the current time interval and the node identifiers of the nodes identified as being authorised for selection as the leader node in the node participation document.

This advantageously provides the blockchain system with a method for flagging particular nodes as being eligible for selection as the leader node such that the right to become the leader node for a given time interval is not granted immediately upon setting up a new participant node. This further improves the security of the blockchain system.

Optionally, the received node participation document may be cryptographically signed and the method may further comprise verifying, at the participant node, the authenticity and/or integrity of the received node participation document based on the cryptographic signature. In this manner, the participant node may advantageously verify that the locally stored version of the node participant document is a valid version that has not been tampered with.

Optionally, the participant node may periodically receive updated versions of the node participation document, each version being associated with a valid from time and a valid until time; and the method may further comprise performing the determination, at the participant node, of the leader node for the current time interval based on the node participation document that is currently valid and has the most recent valid from time. This advantageously enables the participant node to receive updated node participation documents in advance of the newly received node participation document becoming valid so that there is no interruption of service due to the possession of only an out of date version of the node participation document.

Optionally, determining, at the participant node, a leader node for the current time interval may comprise determining the node listed in the node participation document for which the numerical disparity between the true random number associated with the current time interval and the corresponding node identifier is closest to zero. This advantageously provides a simple calculation that can be performed with minimal computing resources in order for each participant node to identify the leader node in order to determine where to send any new transactions to and also to determine how to authenticate the new blocks received through the blockchain system.

Optionally, the blockchain method further comprises deleting the block body and maintaining the block header for blocks in the local blockchain stored on the participant node that do not meet a threshold. This advantageously provides a rolling blockchain of a limited size for local storage at participant nodes based on a threshold timeframe, such as within a certain number of days or weeks, or blockchain storage size. By reducing the local storage requirement for participant nodes, the barriers for users to set up participant nodes is reduced and the distributed nature of the blockchain system can be further improved, while maintaining the block headers for basic blockchain validation.

In a second aspect, the present disclosure relates to a further method for a blockchain system operated at a node participating in the blockchain system. The method comprises receiving, at a participant node participating in the blockchain system, a plurality of true random numbers, each associated with a given time interval; and receiving, at the participant node, one or more new blocks for appending to a local blockchain stored at the participant node, wherein each new block comprises a block header and a block body; wherein the block header comprises a hash of the previous block in the blockchain, a hash of the block body of the block, a Merkle tree root of the block, a timestamp, the true random number associated with the time interval corresponding to the timestamp and a cryptographic signature of the block using a private key associated with a node that generated each new block. The method further comprises verifying, by the participant node, the block header data of each new block and the cryptographic signature of each new block using a public key associated with the node that generated each new block; adding, by the participant node, each new block to the local blockchain stored at the participant node if the new block is verified; and deleting, from the local blockchain stored at the participant node, the block body for blocks stored at the participant node that do not meet a threshold, without deleting the block header corresponding to the deleted block body.

The method of the second aspect advantageously structures the blocks in the blockchain in a manner that enables blockchain data that does not meet the threshold to be deleted from the locally stored versions of the blockchain at individual participant nodes without affecting the integrity of the blockchain. This data structure at the participant nodes enables nodes to confirm or validate previous transactions without requiring the full blockchain to be stored locally and thus enables devices with limited storage space to fully participate in the blockchain network, for example the threshold may be set to a certain number of days or a certain storage size of the local blockchain.

Optionally, if the participant node is determined, by a consensus protocol of the blockchain system, to be a leader node that can generate one or more new blocks to be validly appended to the blockchain of the blockchain system, the method further comprises: receiving, at the leader node, from the nodes participating in the blockchain system, new transactions for inclusion in the blockchain system; confirming, at the leader node, the received new transactions by searching for corresponding unspent transaction outputs in the blockchain system; generating, at the leader node, a new block comprising the confirmed new transactions and appending this block to a local blockchain stored at the leader node; and broadcasting, from the leader node, the new block to all of the nodes participating in the blockchain system. This advantageously provides a local node that can locally confirm transactions that require blockchain data from within the threshold, which typically covers the majority of transactions on blockchain systems.

The methods of the first and second aspects may optionally further comprise deleting, by the participant node, transaction data stored in the block bodies of blocks of the local blockchain stored at the participant node having no unspent transaction output. This advantageously further reduces the local storage requirement for participant nodes to store a local version of the blockchain as transaction data that does not include unspent transaction outputs will not be required for the verification of future transactions. This also advantageously improves the efficiency of transaction verification on the blockchain system.

Optionally, in the first and/or second aspects, a subset of the nodes participating in the blockchain system are archive nodes that each store a local blockchain comprising the block header and block body of a genesis block and all subsequent blocks. If the participant node determines that it is the leader node and the block comprising an unspent transaction output required for confirming a new transaction has been deleted from the local blockchain stored at the leader node, the method may further comprise polling, by the leader node, one or more archive nodes for a copy of the unspent transaction output required for confirming the new transaction; verifying, by the leader node, the integrity of the copy of the unspent transaction output based on the Merkle tree root of the block header stored in the local blockchain of the leader node corresponding to the deleted block body; confirming, by the leader node, the new transaction based on the verified copy of the unspent transaction output; and generating, by the leader node, a new block, comprising the confirmed new transaction, to be appended to the blockchain.

Advantageously, this method enables leader nodes that have deleted the block body of certain blocks of the blockchain, that include the required unspent transaction outputs, from their local copy to obtain a copy of these for verification of transactions to be included in the new blocks generated by the leader node. For example, this enables the verification of new transactions that involve unspent transaction outputs from previous transactions that are older than the threshold.

Optionally, if the participant node determines that it is the leader node, the block comprising an unspent transaction output required for confirming a new transaction has been deleted from the local blockchain stored at the leader node, and a subset of the nodes participating in the blockchain system are archive nodes that each store a local blockchain comprising the block header and block body of a genesis block and all subsequent blocks, the method may further comprise polling, by the leader node, one or more archive nodes for a copy of the block required for confirming the new transaction; and verifying, by the leader node, the integrity of the copy of the block by comparing a hash of the block body of the copy of the block with the hash from the block header corresponding to the copy of the block that is stored in the local blockchain stored at the leader node. Moreover, the confirming, at the leader node, of the received new transactions comprises searching for corresponding unspent transaction outputs in the verified copy of the block.

Advantageously, this method enables leader nodes that have deleted the block body of certain blocks of the blockchain from their local copy to obtain this block body data from other nodes participating in the blockchain system, referred to as archive nodes, if and when required for confirming new transactions that are to be written into new blocks of the blockchain by the leader node. For example to confirm new transactions that involve unspent transaction outputs of previous transactions that are older than the threshold.

Optionally, the true random number associated with the current time interval received at the participant node may be a quantum random number. This advantageously provides a true random number that cannot be attacked and guessed in advance, even with the use of third party quantum computing.

### BRIEF DESCRIPTION OF THE DRAWINGS

Embodiments of the invention will now be described, by way of example only, and with reference to the accompanying drawings, in which:
Figure 1 is a block diagram of a plurality of nodes participating in a blockchain system;
Figure 2 is a block diagram of an individual node for participating in the blockchain system;
Figure 3 is a flowchart illustrating a method according to a first aspect of the present disclosure;
Figure 4 is a flowchart illustrating a method according to a second aspect of the present disclosure;
Figure 5 is a flowchart illustrating a first verification method for use in the second aspect of the disclosure; and
Figure 6 is a flowchart illustrating a second verification method for use in the second aspect of the disclosure.

### DETAILED DESCRIPTION

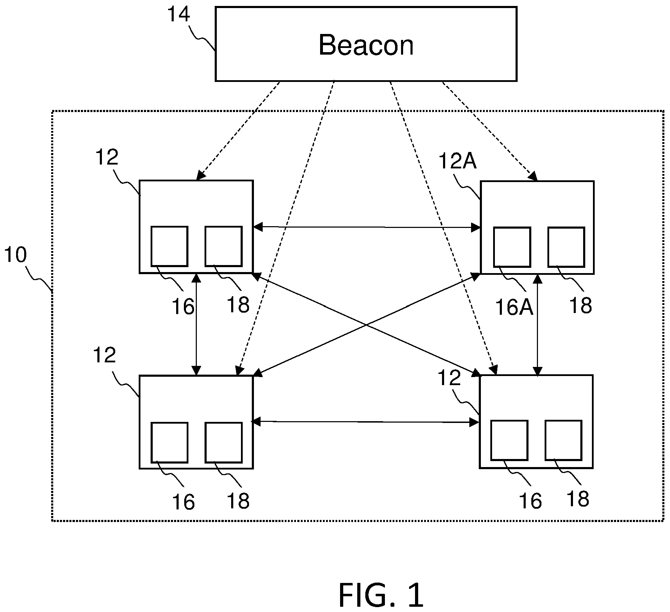

Figure 1 is a block diagram of a plurality of nodes participating in a blockchain system 10. In the blockchain system illustrated in Figure 1, there are four participant nodes 12, 12A, each of which are in communication with the other participant nodes of the blockchain system. One of the participant nodes 12 may be referred to as an archive node 12A. Each of the participant nodes 12 are configured to receive a data input from a data source 14. The data source 14 may act as a beacon broadcasting the relevant data to each of the participant nodes 12, or alternatively the participant nodes may poll the data source 14 in order to obtain the relevant data.

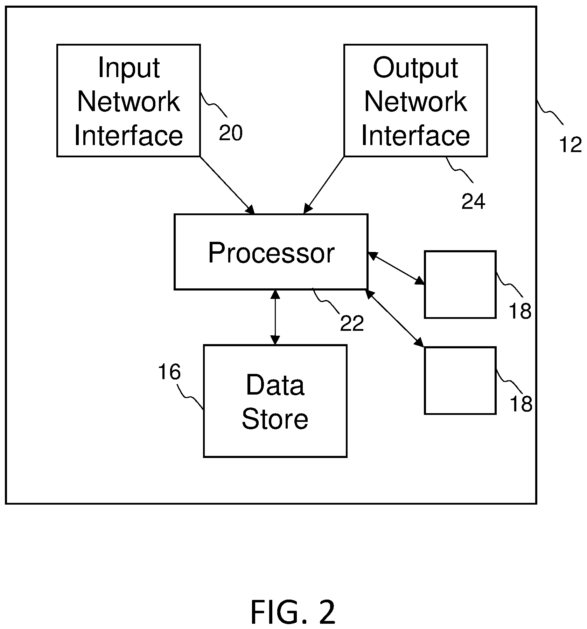

A single participant node 12 is shown in further detail in Figure 2, some of these features have been omitted from Figure 1 for the sake of clarity. The participant node 12 comprises an input network interface 20, a processor 22, an output network interface 24. The input network interface 20 and the output network interface 24 are shown as separate units in Figure 2, however the skilled person will appreciate that these two units may alternatively be embodied in a single bidirectional network interface. The purpose of these network interfaces is to enable the respective participant nodes 12 in the blockchain system 10 to communicate with each other, for example to form a peer-to-peer network. The respective network interfaces may utilise any known wired or wireless network topology over local area networks, wide area networks and the internet.

Each of the participant nodes 12 stores a local version of the blockchain of the blockchain system 10 in a data store 16 and a node participation document in a store 18. Where the local version of the blockchain stored at the participant node is a full version of the blockchain 16A, i.e. the chain all the way from the genesis block up to the current block, the participant node may be referred to as an archive node 12A. Other participant nodes 12 (i.e. the participant nodes 12 that are not archive nodes 12A) may store a partial version of the blockchain 16 that does not include the entire genesis block nor the entire block data of one or more blocks subsequent to the genesis block. This will be described in further detail below in relation to the second aspect of the disclosure.

The node participation document 18 is a list that identifies all of the nodes that are participating in the blockchain system 10 at the time that the node participation document 18 is generated and issued. The node participation document 18 also includes the basic data of each node so that they can be contacted by any other node in the blockchain system 10. This basic data includes a public key for cryptographic digital signatures and a unique public identity to enable other nodes to direct message to and communicate with a given participant node 12. This unique public identity may simply be the IP address of the participant node 12; however, the unique public identity may be set to maintain user anonymity, for example by using an onion address for access through the Tor hidden service. In some embodiments, human readable nicknames may also be provided for each of the nodes identified in the node participation document 18 in order to improve usability.

The inventor has appreciated that this unique public identity, or another unique node identifier listed in the node participation document 18, can be used as a kind of raffle number for selecting one of the nodes 12 listed in the node participation document 18 based on a randomised selection. In particular, in the present disclosure a random number is generated and the selected node is the node 12 for which the difference between the random number and a numerical representation of the unique node identifier or other unique public identity (if not already in a numerical format) is closest to zero. It will be appreciated that other correlations could be used within the scope of the present disclosure, for example a maximum or other numerical disparity could be used instead of being closest to zero.

The selected node 12 will then be considered to be the leader node. The leader node 12, which may also be referred to as a confirming node, will then be recognised by the blockchain system 10 as having the right to validly confirm any new transactions and write or generate the corresponding new blocks that are to be included in and appended to the end of the blockchain. As such, the leader node is analogous to the first node to solve the computational problem in a proof of work protocol.

The data source 14 is configured to generate a new random number every minute; however it will be appreciated that alternative periodicities for random number generation could alternatively be used within the scope of the present disclosure. Accordingly, the selected node 12 will only be the leader node for the minute, or other selected period, corresponding to the generated random number.

Using the locally stored node participation document 18 and the true random number received from the beacon or from polling data source 14 at the input network interface 20, each of the nodes 12 participating in the blockchain system 10 can independently determine, using their respective processors 22, the identity of the node selected as the leader node for the corresponding period using a series of simple calculations that will result in each node arriving at the same answer. This dramatically reduces the amount of computational resource required by each processor 22 in order to determine the leader node in comparison to proof of work methods as well as reducing the corresponding energy usage, which may otherwise be a wasted end product of the proof of work protocol.

This means that the nodes 12 participating in the blockchain network 10 will know to send, using the output network interface 24, any new transactions for inclusion in the blockchain directly to the identified leader node without needing to use a gossip protocol, where new transactions are sent to as many users on the blockchain as possible. This prior art reliance on gossip protocols has been found to result in the same transaction being received by a node around 18 times and accordingly the corresponding waste of network resources can also be minimised in the methods and system of the present disclosure so that these network resources can instead be utilised for improving the transaction throughput of the blockchain system 10.

The processor 22 of the leader node 12 can then start confirming the validity of the received transactions in the usual manner and writing these into new blocks. Because the above consensus protocol is quick and easy for the nodes to complete, new blocks can be created at a faster rate, thus reducing the transaction confirmation wait times of prior art systems and also improving the resistance of the blockchain to attack by moving newly appended blocks away from the end of the blockchain more quickly by appending further new blocks.

The newly created blocks are then broadcast from the output network interface 24 of the leader node to all of the other nodes participating in the blockchain system for appending to the local versions of the blockchain stored at each node. The participant nodes 12 can then verify, using the processor 22, that the hash of the previous block identified in the new block header matches that of the most recent block in the blockchain currently stored at the participant node 12. The processor 22 of the participant node 12 further validates the digital signature contained in the block header using the public-key associated with the leader node in the node participation document 18. If the block is determined to be valid by the processor 22, then the participant node 12 will append the received block to the locally stored blockchain 16; 16A.

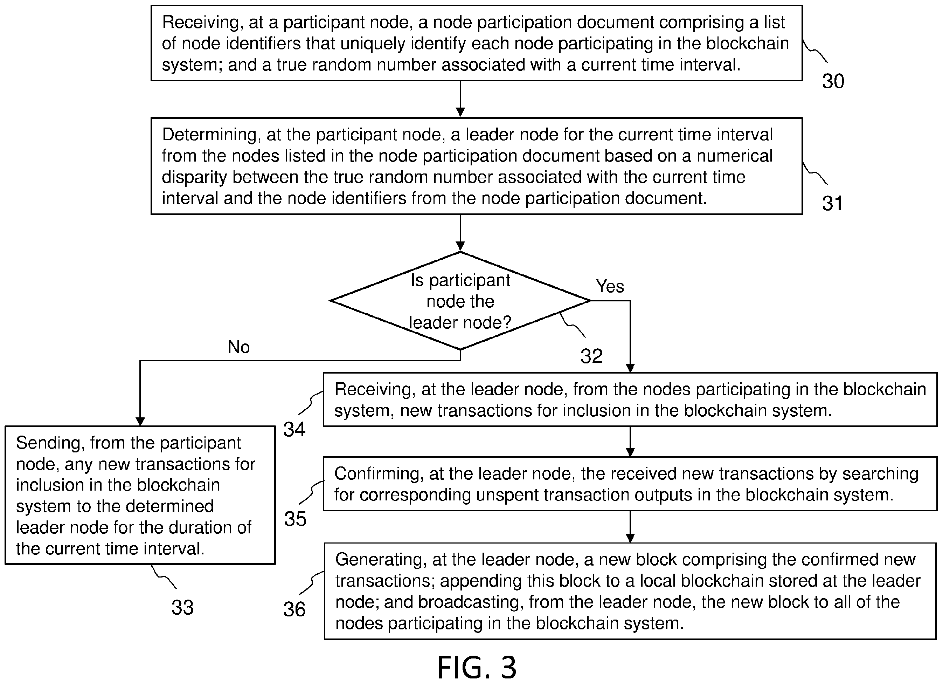

Figure 3 illustrates a flowchart according to the above first aspect of the present disclosure. In step 30, the participant node 12 receives the node participation document comprising a list of node identifiers that uniquely identify each node participating in the blockchain system 10; and a true random number associated with a current time interval. At step 31, the participant node 12 determines a leader node for the current time interval from the nodes listed in the node participation document 18 based on a numerical disparity between the true random number associated with the current time interval and the node identifiers from the node participation document 18.

If the participant node 12 determines that it is not the leader node at step 32, then the flowchart proceeds to step 33 where the participant node 12 sends any new transactions for inclusion in the blockchain system 10 to the determined leader node for the duration of the current time interval. Conversely, if the participant node 12 determines that it is the leader node at step 32, then the flowchart proceeds to step 34 where the participant node 12, which may now be referred to as the leader node, receives any new transactions for inclusion in the blockchain system 10 from the other nodes 12 participating in the blockchain system 10.

At step 35, the leader node 12 confirms the received new transactions by searching for corresponding unspent transaction outputs in the blockchain system 10. These unspent transaction outputs are the outputs of previous transactions that can be validly spent as the input in new transactions. Then, at step 36, the leader node 12 generates a new block comprising the confirmed new transactions, appends this new block to the local blockchain stored at the leader node, and broadcasts the new block to all of the other nodes participating in the blockchain system 10.

While prior art cryptocurrency blockchains have a hardcoded limit in the software to limit the number of transactions that can be included, this prior art cap is still not low enough to prevent such blockchains from growing at a rate at which the average home and mobile user would be unable to participate in. This is leading to the undesirable centralization of prior art blockchains in networks that are typically designed to be fully distributed.

In the blockchain system 10 of the present disclosure, the blocks written do not have a block size limit, this means that there is no theoretical limit on how many transactions can be included in a block. Along with the improved network routing and the selection of the leader node for a given period, the only limitation in the number of transactions per second is the hardware and the network bandwidth; indeed 120,000 transactions per second have been simulated in a lab environment. The network automatically scales and can handle increases in the number of transactions per second by fully utilizing the network and the resources available to the network as demand increases. The selection in advance of a single leader node 12 that will confirm subsequent transactions for a given period has also been found to improve the possible number of transactions per second.

The processor 22 of the leader node 12 creates blocks having a block structure divided into a block header and a block body. The block header comprises the hash of the previous block in the blockchain, a hash of the data in the body of the current block, the random number associated and a cryptographic signature of the block using a private key associated with the leader node. The block header may also comprise a Merkle tree root for the block and a UNIX timestamp associated with the block. The block body comprises the transaction data (including the amount of the transaction, the sending user address and the receiving user address), typically encoded in a Merkle tree data structure.

Should, for whatever reason, the leader node 12 become offline and/or some of the new transactions are not confirmed into a new block by the leader node, these will be maintained in a transaction pool memory buffer so that they can be forwarded to and confirmed by the following leader node. In this manner, the process continues and all new transactions that have not yet been confirmed (or indeed rejected) get rolled into the next leader's block.

The only computationally expensive operations here are the processes of confirming that the new transactions are valid (by searching for the relevant unspent transaction outputs in the blockchain) and creating the hash of the whole block (once all transactions in the period are confirmed). This means that the computation can be performed on the processor 22 of a low resource device such as a mobile device because the required computation is no more expensive than other common tasks.

Because there is only ever one leader node 12 at any one point in time and it is simple for any of the participant nodes to determine who the leader node was at that point in time based on the random number and node participation document for that time, the possibility of a fork in the blockchain and the vulnerability to a double spend attack is removed. Each version of the node participation document 18 and the random number for each interval are archived so that further validations can be carried out after the fact. These archived versions of the node participation document and the random number for each interval may be stored locally at the participant node 12, or alternatively they may be accessed from a trusted third party server.

It has been determined that creating a new block every 12 seconds provides enough time for around 95% of the blockchain system network 10 to send transactions to the leader node 12, confirm them and then write them into a new block by the leader node; this means that a leader node 12 would typically be expected to write five new blocks during the one minute period for which they are the leader node, but this is not required or enforced. The skilled person will however appreciate that other block creation and leader node selection periodicities could also be used with the present disclosure.

Because the blockchain system 10 of the present disclosure requires comparatively little energy to operate, the process of confirming new transactions and recording these into new blocks is very cheap and thus there is no, or a greatly reduced, need to incentivise miners to undertake the confirmation of new transactions. This means that transactions can be treated more uniformly and, in particular, without regard to the size or value of the transactions to be confirmed.

Since the blockchain system 10 uses a randomly selected leader node 12 for creating new blocks, adversaries with a large amount of hashing power cannot simply recreate a valid blockchain going back many blocks as is the case in prior art blockchain systems. Instead, it would be necessary for the adversary to compromise every single leader node that has been selected from the block that they are attempting to compromise all the way to the present day.

This is because all the other nodes 12 can look up archived versions of the random numbers and corresponding node participation documents 18 in order to determine who the selected leader node was for each block and can then cryptographically verify the digital signatures in the headers of these blocks using the public-keys associated with the leader nodes in the node participation document 18. Accordingly, for an immutability attack to be successful, the adversary would need to have access to the private-key of each of the leader nodes involved.

In a hypothetical situation, an adversary may, regardless of economic cost, have decided to attack the blockchain system 10 of the present disclosure, and have been patient enough to control more than 50% of nodes on the blockchain system 10 and establish a reputation such that their nodes 12 are eligible to be chosen as the leader node. In these circumstances, there is more than a 50% chance of the nodes controlled by the adversary being chosen as the leader node and allowed to confirm transactions on the blockchain over any given period due to the randomness of the consensus protocol.

If or when the adversary gets control of a leader node 12, they may try to add newly created tokens by injecting an invalid transaction from one node to another crediting the adversary account with a larger balance than available in the donor account. As the adversary is the leader node 12, they can maliciously confirm the invalid transaction and it will be accepted onto the blockchain 10. However, as and when the adversary tries to spend the newly credit amount, the new leader node confirming the block will not accept the transaction because the new leader node can look back and see that the previous invalid transaction was created out of thin air. Other participant nodes 12 in the blockchain system 10 may also periodically check the validity of transactions stored on the blockchain and thus such malicious transactions may also be detected in this manner.

All of the other participant nodes 12 on the blockchain system 10 will also be able to see which compromised node created and/or confirmed the invalid transaction and thus the compromised node can then be removed from the node participation document 18 in order to prevent it from further participating in the blockchain system 10.

In order to prevent any parties from being able to guess the random number and identify the corresponding node 12 that would be selected as the leader node or to pre-emptively modify a unique node identifier so that the node to be selected is altered, a true random number generator should be used. For example a hardware random number generator based on a physical process such as the noise monitored in classical or quantum systems or quantum randomness at the atomic level and below.

Due to the unpredictability of such random numbers, it is impossible for any party to predict the bits before they are published by the data source 14. This means that the random number is resistant to attempts by outside parties to alter the distribution of the random number bits, whilst all users that access the source of the beacon can be confident that they all receive the same random string. By including the random number in the header of the block, it is also possible to prove that the block was not created prior to the distribution of that random number to the nodes in the blockchain system 10. This prevents the possibility of an offline chain attack on the blockchain.

Using quantum random numbers can ensure random values that are unpredictable even if an attacker is able to gain access to and observe the random number generator source 14. For example, the source may use quantum entangled photons as the source of the digital bits of the quantum random number as they are fundamentally unpredictable. This dramatically increases the cost to attack the blockchain system 10 by orders of magnitude greater than prior embodiments.

In one embodiment two independent hardware random number generators each provide 512 bits of randomness, and these two values are then XOR'ed together to yield a Seed Value. This Seed Value is then collected together with a plurality of descriptive data (for example a version number, frequency of output, time stamp, a code for a chaining status, and the value of the previous output) to link the random number to the time that it was created as well as linking to the previous random number. This is then hashed with SHA-512 and signed with a private key linked to the data source 14 to produce a digital signature. The public key linked to the data source 14 can then be used to verify that the signature corresponds to the relevant data and is signed by the data source 14.

Finally, the signature is hashed with SHA-512 again to create the final output value. This final output value preserves the original entropy from the seed value, but additionally makes the output value dependant on the private key of the data source 14 and all the relevant background data in a verifiable way.

In this manner, the blockchain system 10 is able to confirm transactions on nodes 12 comprising very low power computational devices at very high speed with a very high degree of security. Further, the network 10 can be scaled rapidly and at very low cost. Moreover, the complete integrity of the blockchain is maintained at all times, and all transactions appear on the chain.

### Authority Nodes

The blockchain system 10 may further comprise one or more authority nodes that are responsible for the creation, maintenance and distribution of the node participation document 18. The authority nodes will not be considered to be participant nodes 12 because they do not take part in the storage of the blockchain or the confirmation of new transactions - they are only responsible for the node participation document 18.

These semi-trusted authority nodes will scale with the size and load of the blockchain system 10. Every authority node has a very-secret, long-term "Authority Identity Key". This key is used to sign "key certificate" documents. Every key certificate contains a medium-term "authority signing key" which is then used by the authority node to sign the node participation document information 18. This digital signature may be verified by the participant nodes prior to using a new node participation document.

Participant nodes 12 periodically inform the authority nodes of any changes in the data stored about them. Any changes to the node participation document 18 requires the majority agreement of the authority nodes and the updated version will then be published to all of the participant nodes 12. Each participant node 12 requires an up to date version of the node participation document 18 so that it can correctly select the leader node for a given time period based on the associated true random number. Participant nodes 12 may be able to obtain updated versions of the node participation document 18 from other participant nodes 12; however, due to the cryptography used, no one other than the authority nodes can validly alter the node participation document 18, and any invalid alterations will be detectable by any of the participant nodes 12.

The use of the node participation document 18 avoids the need for a DNS server. Moreover the authority nodes can monitor the activity of the participant nodes 12 and update the node participation document 18 to prevent malicious nodes from being eligible for selection as the leader node. New nodes 12 may also be prevented from selection as the leader node by only considering a subset of the nodes identified in the node participation document 18, for example those nodes that have built up a reputation of respectable behaviour, as being eligible to become the leader node. This could be indicated in the node participation document using a flag. In this manner, in one embodiment, the leader node that is indicated as being eligible for leader selection and that has the numerical disparity closest to zero between the participant node identifier and the true random number may be selected as the leader node.

The node participation document 18 has a finite time period during which it is valid so as to ensure that the participant nodes 12 have the most up to date version of the node participation document 18. Accordingly, node participation documents 18 are assigned a "valid-after" time, a "fresh-until" time and a "valid-until" time. The valid-after time is set to precede the fresh until time, which in turn precedes the valid until time. These times are chosen so that each node participation document 18 will be "fresh" until the next node participation document becomes valid, and "valid" for a while after. In a preferred embodiment, three node participation documents 18 may be valid at any given time (e.g. a historic, current and future version of the node participation document). If all node participation documents at a participant node expire, then the node 12 may continue to operate on the basis of the expired node participation document as this is not a vector for attack.

The node participation document 18 may further identify the uptime and bandwidth of each node 12 participating in the blockchain system 10 and the IP address may further identify the TCP ports at which the participant node 12 is configured to function. In order to ensure that a Sybil attack cannot be cheaply conducted on the network 10, certain properties and requirements may be enforced such as only allowing one node identity to be linked to an IP address and requiring a node 12 to be online for a period of two weeks prior to being flagged as entitled for selection as the leader node. This makes it significantly more expensive for a would be attacker to try and flood the node participation document 18 with compromised participant nodes that are entitled for selection as the leader node.

The authority nodes have no incentive to behave maliciously as they do not participate in the mining or confirmation of transactions. Further, since majority agreement of the authority nodes is required for updates to the node participation document 18, it is very difficult for malicious nodes to influence the node participation document. The node participation document 18 is preferably updated hourly.

### Rolling Blockchain

Based on an analysis of blockchain transaction behaviour, it has been observed that the vast majority of transactions that occur in cryptocurrencies use unspent transaction outputs that were themselves generated within the previous 30 days. Accordingly, the inventor has appreciated that participant nodes 12 may be allowed to delete data from their locally stored blockchain 16 without significant impact to the confirming of new transactions. In this manner, and according to the second aspect of this disclosure, a reduced blockchain may be stored at the participant node 12. This aspect of the present disclosure may be used with the above consensus protocol for leader / confirming node selection, or it may instead be used with alternative consensus protocols (such as proof of work, proof of authority and proof of stake).

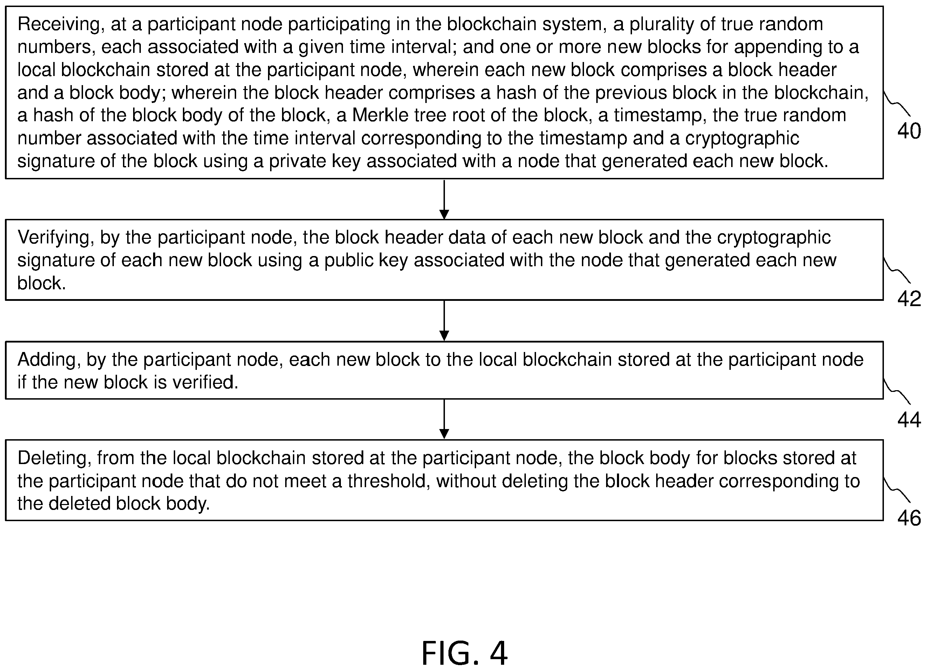

Figure 4 illustrates a flowchart according to the second aspect of the present disclosure. In step 40, the participant node 12 receives a plurality of true random numbers, each associated with a given time interval, and one or more new blocks for appending to a local blockchain 16 stored at the participant node 12. Each new block comprises a block header and a block body and each block header comprises a hash of the previous block in the blockchain, a hash of the block body of the block, a Merkle tree root of the block, a timestamp, the true random number associated with the time interval corresponding to the timestamp and a cryptographic signature of the block using a private key associated with a node that generated each new block.

At step 42, the participant node 12 verifies the block header data of each new block and the cryptographic signature of each new block using a public key associated with the node that generated each new block. Then, if the new block is verified, the block is added to the local blockchain 16 stored at the participant node 12 at step 44.

At step 46, the participant node 12 deletes, from the locally stored blockchain 16, the block body for blocks stored at the participant node 12 that do not meet a threshold, however the block headers corresponding to the deleted block bodies are not deleted. Accordingly, the block headers of the genesis block and each and every subsequent block are maintained in the locally stored version of the blockchain 16.

In order to maintain the integrity of the blockchain, archive nodes 12A can be provided where the archive nodes are a subset of the participant nodes 12 that, in addition to acting as a normal participant node in the blockchain system 10, also store the full blockchain history. While any participant node 12 can choose to store the full blockchain history and act as an archive node 12A, it is expected that these archive nodes 12A will be fewer in number than the other participant nodes due to the increased storage resources required.

Accordingly, since data is never truly deleted from the blockchain system 10 (as it is maintained in the archive nodes 12A) participant nodes 12 can choose to delete data to save storage resources and the amount of data held by the participant node 12 can be a variable. This allows more capable nodes e.g. servers, to locally store a larger amount of the blockchain 16, whilst mobile devices would locally store a smaller amount due to their comparatively limited resources.

When a node decides to delete data, two strategies can be used. The first strategy is a simple deletion of the block body data from all blocks that do not meet a certain threshold, such as a number of days or a total storage size limit. In this manner, the user operating the participant node can limit the amount of the blockchain stored locally on their device by fixing a given storage size limit, or by only storing transactions that have occurred within a given time frame (which will result in a variable size of locally stored blockchain dependent on the number of transactions that were confirmed during that period). The block headers are comparatively small and may be advantageously used to validate the integrity of the blockchain and thus all of the block headers of the blockchain are maintained, even when the corresponding block body data is deleted.

The second strategy involves the deletion of transaction data that does not have any unspent transaction output from blocks that are stored in the local blockchain 16 at the participant node 12, for example even if the transactions are more recent than the above threshold. The first and second strategies may be used independently or in combination. The second strategy will be explained in further detail below.

In the blockchain system 10 of the present disclosure, transactions reference tokens in the transaction inputs and reassign the value to the recipients in the transaction outputs. When the transaction is accepted on the blockchain, the tokens referenced in the transaction inputs are considered spent and any new "unspent transaction outputs" (UTXO) are created according to the transaction's outputs. Unspent transaction outputs are how every participant node 12 in the blockchain system 10 keeps track of the ownership of the tokens in the system. Unspent transaction outputs are not only created for change, but they are created any time a transaction defines a recipient. Unspent transaction outputs are spent whenever they get used as a transaction input; however, the transaction remains a part of the blockchain and is then considered to be a transaction output (rather than an unspent transaction output) that everyone can review to see the previous chain of transactions.

Take this example:
- Input(utx01): Recipient Output
---->
- Input(utxo2): Change Output

When the transaction is created, it spends the two UTXO referenced in the inputs. When the transaction is confirmed, every participant node 12 removes them from their UTXO database. However, the reference still exists in the blockchain as the outputs of the transactions that created those UTXOs. The transaction also creates two new UTXOs, the Recipient Output and the Change Output. Every participant node 12 in the blockchain system 10 adds these two UTXO to their database. Let's say that the sender spends the token in the change output quickly thereafter, removing the change output from the UTXO database, but the recipient TXO remains unspent. In that case, (or any other where at least one of the two outputs remains unspent) the transaction would be considered to form part of the "Total Transactions With Unspent Outputs".

Since unspent transaction outputs are required as the input for future transactions, any transactions which no longer have any unspent transaction outputs are no longer required to be stored for the confirmation of future transactions, since they cannot be used again. Accordingly, this data can be removed from the local node storage to further reduce the storage requirement on the node. In addition, this purging of data also increases the efficiency of the nodes when confirming and validating other transactions, since there are fewer transactions to search through.

This may enable the storage for a participant node 12 to be reduced to around 3GB from around 180GB for comparable blockchain systems. This also improves the scalability of the overall blockchain system 10 whilst still maintaining a distributed consensus protocol.

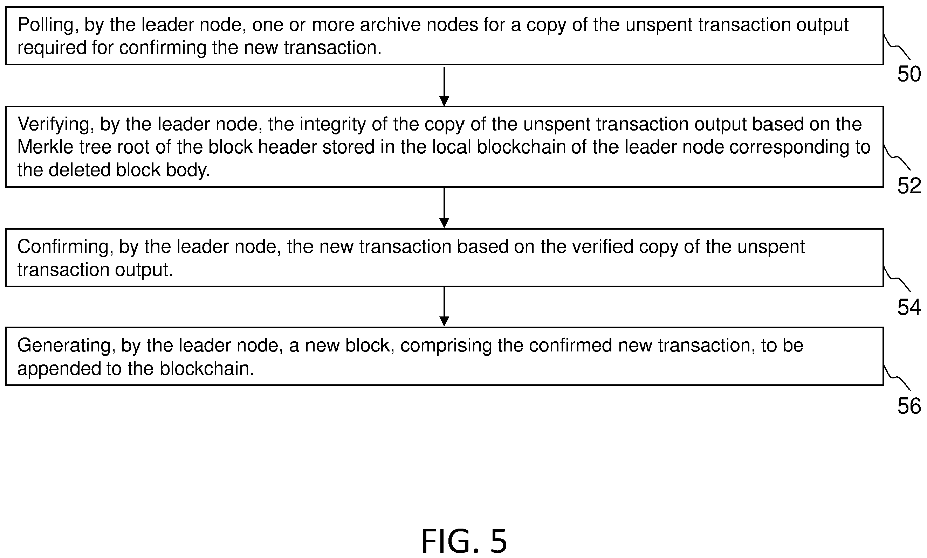

In one embodiment, if a participant node 12 determines that it is the leader node for the current time interval and unspent transaction outputs dating back further than the threshold, or otherwise deleted, are required, then the leader node 12 can poll one of the archive nodes 12A, which may be identified in the node participation document 18, in order to obtain a copy of the unspent transaction outputs required for confirming the new transactions (and that are missing from the local blockchain 16 of the leader node 12) as set out in step 50 of Figure 5.

To ensure that an archive node 12A does not give fake unspent transaction output data to a node when it was requested, the leader node 12 will be able to check the integrity of the block based on the Merkle tree root of the block header stored in the local blockchain 16 of the leader node 12 corresponding to the deleted block body as set out in step 52 of Figure 5. The leader node 12 can then confirm the received new transactions based on the verified copy of the unspent transaction output at step 54 and generate the new block to be appended to the blockchain, comprising the confirmed new transactions, at step 56.

Alternatively, the archive node 12A may send all unspent transaction outputs relating to the relevant user. This also allows the leader node 12 to confirm the new transactions for inclusion in a new block of the blockchain.

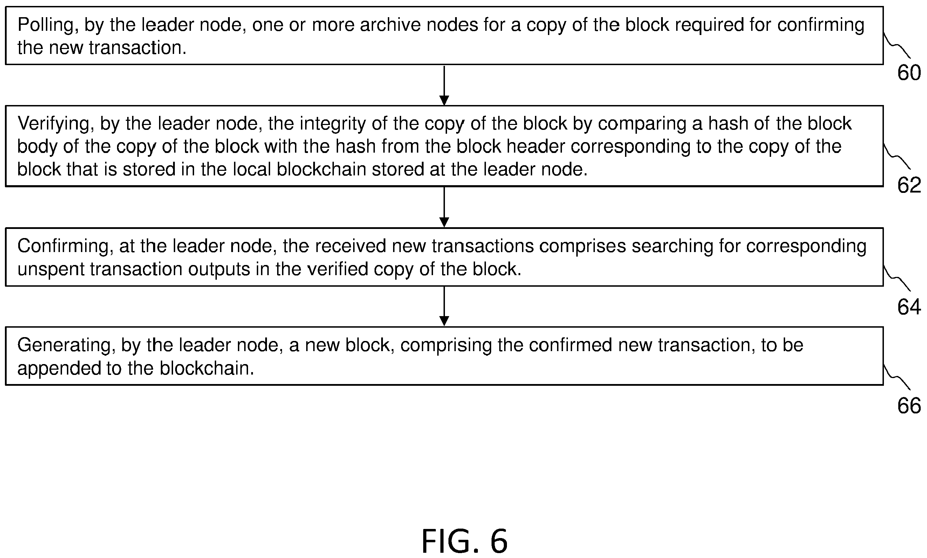

Alternatively or in combination with the above embodiment, if a participant node 12 determines that it is the leader node for the current time interval and unspent transaction outputs dating back further than the threshold, or otherwise deleted, are required, then the leader node 12 can poll one of the archive nodes 12A, which may be identified in the node participation document 18, in order to obtain the relevant / required block bodies that are missing from the local blockchain 16 of the leader node 12 as set out in step 60 of Figure 6.

To ensure that an archive node 12A does not give a fake block to a node when it was requested, the leader node 12 will be able to check the integrity of the block by confirming that the hash of the received missing block matches the hash shown in the corresponding block header that is stored in the local blockchain 16 of the leader node 12 as set out in step 62 of Figure 6. The properties of the blockchain ensure that a malicious archive node 12A could not forge a transaction into a previous block, since the transaction hash would not match to the Merkle tree kept by the leader node, and thus would be detected as malicious. The leader node 12 may also check that the random number used is the correct value.

The leader node 12 can then confirm the received new transactions by searching for the corresponding unspent transaction outputs in the verified copy of the block at step 64 and generate the new block to be appended to the blockchain, comprising the confirmed new transactions, at step 66.

In this manner, the block structure enables some nodes 12 in the blockchain system 10 to delete a portion of the transaction data from the locally stored blockchain, while ensuring that deleted data can be retrieved and that even if an archive node 12A becomes compromised, it cannot be used to alter the history of the blockchain without detection. This is because the hashing collision resistance means that the probability of an attacker being able to generate a block with different contents with a valid hash is extremely low, such that this attack is not realistic even if the private-key is known.

In view of the above, the blockchain system 10 of the present disclosure has overcome the following issues:
- Scalability - the blockchain system 10 enables low resources users such as smart phones to fully participate as nodes 12 in the blockchain system 10;
- Energy usage - the consensus protocol removes the requirement for the highly wasteful (energy) process of proof of work mining and thus also reduces the associated cost of transactions;
- Forking / double spend - the consensus protocol ensures the entire blockchain system 10 always knows where the next block is to come from, and all nodes 12 can come to this conclusion independently without the possibility of a fork in the blockchain, and thus no chance of a double spend attack;
- Quantum resistance - the use of quantum sources for randomness and next generation hashing algorithms prevents the blockchain system 10 from being subject to theoretical attacks even when quantum computing becomes mainstream; and
- Speed - by combining the consensus protocol and no block size limitation, we are able to confirm transactions into a block very quickly with a maximum confirmation time of 12 seconds. Once the transactions are included into a block they are confirmed with no need to wait for additional blocks to be added on top of it since there is no risk of a fork. The only remaining limitations are the hardware and the speed of the connections over the number of transactions per second processed.

The ease of adoption due to low power requirements and widespread network access mean that a stable blockchain size can be maintained with no scaling issues on memory usage. Any increases in network adoption would result in faster speeds on the network. Moreover transactions can be confirmed within seconds to a minute rather than an hour in some other blockchain systems.

It may be anticipated that the token of the blockchain system 10 of the present disclosure may become a leading cryptocurrency and an alternative to fiat money that can serve as both a store of value and a medium of exchange. The token may be used in closed loop payment systems and kept for investment purposes. Due to the high transaction rates possible, the token may also be used for high frequency trading on exchanges. The token may further be used to establish rights and ownership over a process and can be securely transferred as required by process.

For completeness, it is noted that the flowcharts of Figures 3 to 6 illustrate the operation of example implementations of methods according to the present disclosure. Each block in the flowcharts may represent a module comprising one or more executable computer instructions, or a portion of an instruction, for implementing the logical function specified in the block. The order of blocks in the figures are only intended to be illustrative of an example. In alternative implementations, the logical functions illustrated in particular blocks may occur out of the order noted in the figures. For example, the processes associated with two blocks may be carried out simultaneously or, depending on the functionality, in the reverse order. Each block in the flowchart may be implemented in software, hardware or a combination of software and hardware.

As will be appreciated by the skilled person, the invention described herein may be embodied in whole or in part as a method, a data processing system, or a computer program product including computer readable instructions. Accordingly, the invention may take the form of an entirely hardware embodiment or an embodiment combining software, firmware, hardware and/or any other suitable approach or apparatus.

Any computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Embodiments of the invention can be described with reference to the following numbered clauses, with preferred features laid out in the dependent clauses:
Clause 1. A method for a blockchain system, comprising:
   receiving, at a participant node, a node participation document comprising a list of node identifiers that uniquely identify each node participating in the blockchain system;
   receiving, at the participant node, a true random number associated with a current time interval; and
   determining, at the participant node, a leader node for the current time interval from the nodes listed in the node participation document based on a numerical disparity between the true random number associated with the current time interval and the node identifiers from the node participation document;
   wherein the blockchain system identifies the leader node as the only node that can generate one or more new blocks during the corresponding time interval to be validly appended to a blockchain of the blockchain system.
Clause 2. The method of clause 1, wherein:
   if the participant node determines that it is the leader node for the current time interval, the method further comprises:
      receiving, at the leader node, from the nodes participating in the blockchain system, new transactions for inclusion in the blockchain system;
      confirming, at the leader node, the received new transactions by searching for corresponding unspent transaction outputs in the blockchain system;
      generating, at the leader node, a new block comprising the confirmed new transactions and appending this block to a local blockchain stored at the leader node; and
      broadcasting, from the leader node, the new block to all of the nodes participating in the blockchain system; and
   if the participant node determines that it is not the leader node for the current time interval, the method further comprises:
      sending, from the participant node, any new transactions for inclusion in the blockchain system to the determined leader node for the duration of the current time interval.
Clause 3. The method of any preceding clause, wherein the one or more new blocks generated by the leader node comprise a block header and a block body; wherein the block header comprises: a hash of the previous block in the blockchain, a hash of the block body of the block, the true random number associated with the current time interval and a cryptographic signature of the block using a private key associated with the leader node.
Clause 4. The method of clause 3, wherein the block header of the one or more new blocks generated by the leader node further comprises a Merkle tree root and a timestamp.
Clause 5. The method of clause 3 or 4, wherein the node participation document further identifies a cryptographic public key associated with each of the nodes participating in the blockchain system and, if the participant node determines that it is not the leader node for the current time interval, the method further comprises:
   receiving, by the participant node, one or more new blocks generated by the leader node, from the leader node;;
   verifying, by the participant node, the block header data of the one or more new blocks and the cryptographic signature of the one or more new blocks using the public key associated with the determined leader node for the time interval associated with the one or more new blocks; and
   adding, by the participant node, the one or more new blocks to a local blockchain stored at the participant node if the blocks are verified.
Clause 6. The method of any preceding clause, wherein the new block is generated at the leader node without a block size limit.
Clause 7. The method of any preceding clause, wherein the node participation document identifies a subset of the nodes participating in the blockchain system as being authorised for selection as the leader node; and the leader node determined by the participant node for the current time interval is based on a numerical disparity between the true random number associated with the current time interval and the node identifiers of the nodes identified as being authorised for selection as the leader node in the node participation document.
Clause 8. The method of any preceding clause, wherein the received node participation document is cryptographically signed and the method further comprises verifying, at the participant node, the authenticity and/or integrity of the received node participation document based on the cryptographic signature.
Clause 9. The method of any preceding clause, wherein the participant node periodically receives updated versions of the node participation document, each version being associated with a valid from time and a valid until time; wherein the method further comprises performing the determination, at the participant node, of the leader node for the current time interval based on the node participation document that is currently valid and has the most recent valid from time.
Clause 10. The method of any preceding clause, wherein determining, at the participant node, a leader node for the current time interval comprises determining the node listed in the node participation document for which the numerical disparity between the true random number associated with the current time interval and the corresponding node identifier is closest to zero.
Clause 11. The method of any of clauses 3 to 10, wherein the method further comprises deleting the block body and maintaining the block header for blocks in the local blockchain stored on the participant node that are beyond a threshold.
Clause 12. The method of clause 11, further comprising deleting, by the participant node, transaction data stored in the block bodies of blocks of the local blockchain stored at the participant node having no unspent transaction output.
Clause 13. The method of clause 11 or 12, wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the method further comprises:
   polling, by the leader node, one or more archive nodes for a copy of the unspent transaction output required for confirming the new transaction;
   verifying, by the leader node, the integrity of the copy of the unspent transaction output based on the Merkle tree root of the block header stored in the local blockchain of the leader node corresponding to the deleted block body;
   confirming, by the leader node, the new transaction based on the verified copy of the unspent transaction output; and
   generating, by the leader node, a new block, comprising the confirmed new transaction, to be appended to the blockchain.
Clause 14. The method of clause 11 or 12, wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the method further comprises:
   polling, by the leader node, one or more archive nodes for a copy of the block required for confirming the new transaction; and
   verifying, by the leader node, the integrity of the copy of the block by comparing a hash of the block body of the copy of the block with the hash from the block header corresponding to the copy of the block that is stored in the local blockchain stored at the leader node;
   wherein confirming, at the leader node, the received new transactions comprises searching for corresponding unspent transaction outputs in the verified copy of the block.
Clause 15. The method of any preceding clause, wherein the true random number associated with the current time interval received at the participant node is a quantum random number.
Clause 16. A participant node apparatus for a blockchain system, the participant node apparatus comprising:
   an input network interface configured to receive a node participation document comprising a list of node identifiers that uniquely identify each node participating in the blockchain system; and a true random number associated with a current time interval; and
   a processor configured to determine a leader node for the current time interval from the nodes listed in the node participation document based on a numerical disparity between the true random number associated with the current time interval and the node identifiers from the node participation document;
   wherein the leader node is the only node in the blockchain system that can generate one or more new blocks during the corresponding time interval to be validly appended to a blockchain of the blockchain system.
Clause 17. The apparatus of clause 16, further comprising a data store configured to store a local blockchain and an output network interface; wherein:
   if the participant node determines that it is the leader node for the current time interval:
      the input network interface is further configured to receive new transactions for inclusion in the blockchain system from the other nodes participating in the blockchain system;
      the processor is configured to confirm the received new transactions by searching for corresponding unspent transaction outputs in the blockchain system;
         and to generate a new block comprising the confirmed new transactions and to append this block to the local blockchain stored at the leader node; and
      the output network interface is configured to broadcast, from the leader node, the new block to all of the nodes participating in the blockchain system; and
   if the participant node determines that it is not the leader node for the current time interval:
      the output network interface is configured to send any new transactions for inclusion in the blockchain system to the determined leader node for the duration of the current time interval.
Clause 18. The apparatus of clause 16 or 17, wherein if the participant node determines that it is the leader node for the current time interval, the processor is configured to generate one or more new blocks comprising a block header and a block body; wherein the block header comprises: a hash of the previous block in the blockchain, a hash of the block body of the block, the true random number associated with the current time interval and a cryptographic signature of the block using a private key associated with the leader node.
Clause 19. The apparatus of clause 18, wherein if the participant node determines that it is the leader node for the current time interval, the processor is configured to generate one or more new blocks with the block header further comprising a Merkle tree root and a timestamp.
Clause 20. The apparatus of clause 18 or 19, wherein the node participation document further identifies a cryptographic public key associated with each of the nodes participating in the blockchain system and, wherein if the participant node determines that it is not the leader node for the current time interval:
   the input network interface is configured to receive, from the leader node, one or more new blocks generated by the leader node; and
   the processor is configured to verify the block header data of the one or more new blocks and the cryptographic signature of the one or more new blocks using the public key associated with the determined leader node for the time interval associated with the one or more new blocks; and to add the one or more new blocks to the local blockchain stored at the participant node if the blocks are verified.
Clause 21. The apparatus of any of clauses 18 to 20, wherein the processor is configured to generate the new blocks without a block size limit.
Clause 22. The apparatus of any of clauses 16 to 21, wherein the node participation document identifies a subset of the nodes participating in the blockchain system as being authorised for selection as the leader node; and the processor is configured to determine the leader node for the current time interval based on a numerical disparity between the true random number associated with the current time interval and the node identifiers of the nodes identified as being authorised for selection as the leader node in the node participation document.
Clause 23. The apparatus of any of clauses 16 to 22, wherein the received node participation document is cryptographically signed and the processor is further configured to verify the authenticity and/or integrity of the received node participation document based on the cryptographic signature.
Clause 24. The apparatus of any of clauses 16 to 23, wherein the input network interface is configured to periodically receive updated versions of the node participation document, each version being associated with a valid from time and a valid until time; wherein the processor is further configured to determine the leader node for the current time interval based on the node participation document that is currently valid and has the most recent valid from time.
Clause 25. The apparatus of any of clauses 16 to 24, wherein the processor is configured to determine the leader node for the current time interval based on the node listed in the node participation document for which the numerical disparity between the true random number associated with the current time interval and the corresponding node identifier is closest to zero.
Clause 26. The apparatus of any of clauses 14 to 21, wherein the processor is further configured to delete the block body of blocks stored in the local blockchain of the participant node that are beyond a threshold, without deleting the block header corresponding to the deleted block body.
Clause 27. The apparatus of clause 26, wherein the processor is further configured to delete transaction data stored in the block bodies of blocks of the local blockchain having no unspent transaction output.
Clause 28. The apparatus of clause 26 or 27, wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the processor is further configured to poll one or more archive nodes for a copy of the unspent transaction output required for confirming the new transaction; to verify the integrity of the copy of the unspent transaction output based on the Merkle tree root of the block header stored in the local blockchain of the leader node corresponding to the deleted block body; to confirm the new transaction based on the verified copy of the unspent transaction output; and to generate a new block, comprising the confirmed new transaction, to be appended to the local blockchain.
Clause 29. The apparatus of clause 26 or 27, wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the processor is further configured to poll one or more archive nodes for a copy of the block required for confirming the new transaction; to verify the integrity of the copy of the block by comparing a hash of the block body of the copy of the block with the hash from the block header, corresponding to the copy of the block, that is stored in the local blockchain; to confirm the new transaction based on the verified copy of the block; and to generate a new block, comprising the confirmed new transaction, to be appended to the local blockchain.
Clause 30. The apparatus of any of clauses 16 to 29, wherein the true random number associated with the current time interval received at the participant node is a quantum random number.

## Claims

1. A method for a blockchain system, comprising:
receiving, at a participant node participating in the blockchain system, a plurality of true random numbers, each associated with a given time interval;
receiving, at the participant node, one or more new blocks for appending to a local blockchain stored at the participant node, wherein each new block comprises a block header and a block body; wherein the block header comprises a hash of the previous block in the blockchain, a hash of the block body of the block, a Merkle tree root of the block, a timestamp, the true random number associated with the time interval corresponding to the timestamp and a cryptographic signature of the block using a private key associated with a node that generated each new block;
verifying, by the participant node, each new block using a public key associated with the node that generated each new block;
adding, by the participant node, each new block to the local blockchain stored at the participant node if the new block is verified; and
deleting, from the local blockchain stored at the participant node, the block body for blocks stored at the participant node that do not meet a threshold, without deleting the block header corresponding to the deleted block body;
wherein if the participant node is determined, by a consensus protocol of the blockchain system, to be a leader node that can generate one or more new blocks to be validly appended to the blockchain of the blockchain system, the method further comprises:
receiving, at the leader node, from the nodes participating in the blockchain system, new transactions for inclusion in the blockchain system;
confirming, at the leader node, the received new transactions by searching for corresponding unspent transaction outputs in the blockchain system;
generating, at the leader node, a new block comprising the confirmed new transactions and appending this block to a local blockchain stored at the leader node;
broadcasting, from the leader node, the new block to all of the nodes participating in the blockchain system;
wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the method further comprises:
polling, by the leader node, one or more archive nodes for a copy of the unspent transaction output required for confirming the new transaction;
verifying, by the leader node, the integrity of the copy of the unspent transaction output based on the Merkle tree root of the block header stored in the local blockchain of the leader node corresponding to the deleted block body;
confirming, by the leader node, the new transaction based on the verified copy of the unspent transaction output; and
generating, by the leader node, a new block, comprising the confirmed new transaction, to be appended to the blockchain.

2. The method of claim 1, further comprising deleting, by the participant node, transaction data stored in the block bodies of blocks of the local blockchain stored at the participant node having no unspent transaction output.

3. The method of any of claims 1 or 2,
wherein polling, by the leader node, comprises polling one or more archive nodes for a copy of the block required for confirming the new transaction; and
verifying, by the leader node, the integrity of the copy of the block by comparing a hash of the block body of the copy of the block with the hash from the block header corresponding to the copy of the block that is stored in the local blockchain stored at the leader node;
wherein confirming, at the leader node, the received new transactions comprises searching for corresponding unspent transaction outputs in the verified copy of the block.

4. The method of any preceding claim, wherein the true random number associated with the current time interval received at the participant node is a quantum random number.

5. A participant node apparatus for a blockchain system, the participant node apparatus comprising:
an input network interface configured to receive a plurality of true random numbers, each associated with a given time interval; and one or more new blocks for appending to a local blockchain stored at the participant node, wherein each new block comprises a block header and a block body; wherein the block header comprises a hash of the previous block in the blockchain, a hash of the block body of the block, a Merkle tree root of the block, a timestamp, the true random number associated with the time interval corresponding to the timestamp and a cryptographic signature of the block using a private key associated with a node that generated each new block;
an output network interface;
a data store configured to store a local blockchain; and
a processor configured to verify each new block using a public key associated with the node that generated each new block; to add each new block to the local blockchain if the new block is verified; and to delete from the local blockchain the block body for blocks stored at the participant node that do not meet a threshold, without deleting the block header corresponding to the deleted block body;
wherein the processor is further configured to determine, by a consensus protocol of the blockchain system, whether the participant node is a leader node that can generate one or more new blocks to be validly appended to the blockchain of the blockchain system; wherein if the participant node is determined to be a leader node:
the input network interface is further configured to receive new transactions, from the nodes participating in the blockchain system, for inclusion in the blockchain system;
the processor is configured to confirm the received new transactions by searching for corresponding unspent transaction outputs in the blockchain system; and to generate a new block comprising the confirmed new transactions and append this block to the local blockchain;
the output network interface is configured to broadcast the new block to all of the nodes participating in the blockchain system;
wherein a subset of the nodes participating in the blockchain system are archive nodes that each store a local blockchain comprising the block header and block body of a genesis block and all subsequent blocks; and wherein if the participant node determines that it is the leader node and the block comprising an unspent transaction output required for confirming a new transaction has been deleted from the local blockchain stored at the leader node, the processor is further configured to poll one or more archive nodes for a copy of the unspent transaction output required for confirming the new transaction; to verify the integrity of the copy of the unspent transaction output based on the Merkle tree root of the block header stored in the local blockchain of the leader node corresponding to the deleted block body; to confirm the new transaction based on the verified copy of the unspent transaction output; and to generate a new block, comprising the confirmed new transaction, to be appended to the local blockchain.

6. The apparatus of claim 5, wherein the processor is further configured to delete transaction data stored in the block bodies of blocks of the local blockchain having no unspent transaction output.

7. The apparatus of any of claims 5 or 6, wherein polling one or more archive nodes comprises obtaining a copy of the block required for confirming the new transaction; and the processor is further configured to verify the integrity of the copy of the block by comparing a hash of the block body of the copy of the block with the hash from the block header, corresponding to the copy of the block, that is stored in the local blockchain; to confirm the new transaction based on the verified copy of the block; and to generate a new block, comprising the confirmed new transaction, to be appended to the local blockchain.

8. The apparatus of any of claims 5 to 7, wherein the true random number associated with the current time interval received at the participant node is a quantum random number.
